# EUROPÄISCHE PATENTANMELDUNG

(11) **EP 2 492 761 A2**
(43) Veröffentlichungstag der Anmeldung: **29.08.2012**
(21) Anmeldenummer: 12003970.6
(22) Anmeldetag: 15.12.2003
(51) Int. Cl.: G05B 9/03, G08B 29/16, H04L 1/06, H04L 1/00

(54) **Verfahren und Vorrichtung zur sicheren Informationsübertragung**

(30) Priorität: 17.01.2003 DE 10301504
(62) Teilanmeldung aus: 03028825.2
(71) Anmelder: Phoenix Contact GmbH & Co. KG, 32825 Blomberg (DE)
(72) Erfinder: Meyer-Gräfe, Karsten, 33161 Hövelhof (DE); Stallmann, Oliver, 32257 Bünde (DE); Kalkhoff, Johannes, 32825 Blomberg (DE); Horn, Steffen, 32825 Blomberg (DE); Gast, Torsten, 31855 Aerzen (DE)
(74) Vertreter: Bill, Burkart Hartmut

(57) **Zusammenfassung**

Die Erfindung betrifft die Übertragung sicherer Prozesssignale zwischen Ein- und Ausgangseinheiten eines Sicherheitssystems.

Aufgabe der Erfindung ist es, einen Weg aufzuzeigen, mit welchem die Übertragung und in Folge die Verarbeitung von sicheren Prozessinformationen auf wesentlich vereinfachte Weise gewährleistet wird.

Erfindungsgemäß ist somit vorgesehen, zum Übertragen von sicheren Prozessinformationen mehrere, zur Erkennung eines Systemsicherheits relevanten Ereignisses, redundant erfasste Prozesssignale (S₂₁₁-S₂₁₂, S₂₂₁-S₂₂₂, S₁₀₀) zur systembasierten Weiterverarbeitung in ein einziges Prozesssignal (S₁, S₁₁₀) umzusetzen.

## Beschreibung

Die Erfindung betrifft ein Verfahren und eine Vorrichtung zur Übertragung sicherer Prozesssignale zwischen Ein- und Ausgangseinheiten eines Sicherheitssystems.

Insbesondere bei standardisierte Netzwerke umfassenden Systemen, die hohen Sicherheitsanforderungen, wie z.B. SIL 3 nach dem Standard IEC 61508, oder beispielsweise der Sicherheitskategorie 4 nach EN 954-1 genügen müssen, ist die Außenbeschaltung beispielsweise von Sensoren bzw. Aktoren zweikanalig auszuführen, um durch die Redundanz die notwendige Sicherheit zu gewährleisten.

Eine derartige zweikanalige Außenbeschaltung wird bei Sicherheitssystemen herkömmlicherweise, ähnlich vergleichbaren anderen redundanten Außenbeschaltungen, über getrennte Signale von den Sensoren geführt, die über Ein-/Ausgangseinheiten üblicherweise unter Verwendung eines Netzwerkes oder eines Backplane-Busses eines integrierten Rechners zur Steuerung und/oder Logikverarbeitung übertragen werden. Die Steuerung und/oder Logikverarbeitung verarbeitet daraufhin die zweikanalige Signalbeschaltung mittels einer entsprechend angepassten Not-Aus-Funktionskomponente, welche somit ferner mit zwei Kanaleingängen auszubilden ist, und veranlasst in Folge eine sichere Reaktion. Die sichere Reaktion wird oftmals direkt an der Steuerung ausgeführt oder mittels Netzwerk und/oder Backplane-Bus des systemintegrierten Rechners zu einer entsprechenden Ausgangsbaugruppe, beispielsweise zu einem Aktor übertragen.

Aufgabe der Erfindung ist es, einen Weg aufzuzeigen, mit welchem die Übertragung und in Folge die Verarbeitung von sicheren Prozessinformationen auf wesentlich vereinfachte Weise gewährleistet wird, insbesondere bei zusätzlicher Steigerung der übertragbaren und/oder verarbeitbaren Datenmenge ohne Informationsverlust, welches folglich eine verbesserte Ausnutzung der Systemkapazität ermöglicht.

Die erfindungsgemäße Lösung ist auf höchst überraschende Weise bereits durch ein Verfahren mit den Merkmalen des Anspruchs 1, durch eine Vorrichtung mit den Merkmalen des Anspruchs 11 und durch ein System mit den Merkmalen des Anspruchs 20 gegeben.

Vorteilhafte und/oder bevorzugte Ausführungsformen bzw. Weiterbildungen sind Gegenstand der jeweiligen Unteransprüche.

Erfindungsgemäß ist somit vorgesehen, zum Übertragen von sicheren Prozessinformationen mehrere, zur Erkennung eines für ein System sicherheitsrelevanten Ereignisses redundant erfasste Prozesssignale zur systembasierten Weiterverarbeitung in ein einziges Prozesssignal umzusetzen.

Die Erfindung gewährleistet somit, dass insbesondere bei Verwendung einer Vorrichtung zum sicheren Übertragen von zur Systemsicherheit redundant erfassten Prozesssignalen, welche Mittel zum Umsetzen mehrkanalig geführter Prozesssignale in ein einziges, an einem Ausgangskanal abgreifbares Prozesssignal umfasst, bei gleichem Gesamtinformationsgehalt eine wesentlich geringere zu übertragende und folglich weiter zu verarbeitende Datenmenge.

Darüber hinaus ermöglicht die Erfindung die Reduzierung von einer ansonsten zur sicheren Übertragung und systembasierten Weiterverarbeitung von redundant erfassten, sicherheitsrelevanten Signalen notwendigen mehrkanaligen Ausbildung von Signalführungspfaden auf einkanalig ausgebildete Signalführungspfade innerhalb des Systems. Die im System verwendeten Hardware- und/oder Softwareelemente zur Übertragung und/oder Weiterverarbeitung der sicherheitsrelevanten Prozessinformation können somit in vereinfachter und somit kostengünstigerer Weise hergestellt werden. Darüber hinaus ermöglicht die hieraus gewonnene Vereinfachung, insbesondere aufgrund der hierdurch ermöglichten Darstellung des eigentlichen Signalinhalts, eine wesentlich vereinfachte Projektierung und Programmierung sicherer Systeme.

In vorteilhafter Weiterbildung erfolgt die Umsetzung in ein digitales Signal, insbesondere um eine weiter vereinfachte und beschleunigte pozessorgestützte Weiterverarbeitung des Prozesssignals zur Veranlassung höchst zeitkritischer Reaktionen zu gewährleisten.

Umfassen in vorteilhafter Weiterbildung die Umsetzmittel einen A/D-Umsetzer, ist darüber hinaus die Erfassung und/oder Übertragung sowohl von digitalen und/oder analogen Prozesssignalen außenbeschalteter Einrichtungskomponenten gewährleistet, so dass im Wesentlichen jede handelsübliche bzw. kommerziell erhältliche Sicherheitskomponente, wie beispielsweise eine Not-Aus-Komponente oder ein Sensor zur Bereichsüberwachung von Lichtgittern, Schutztüren oder Scannern, dem System zur Speisung sicherheitsrelevanter Prozessinformationen angeschaltet werden kann.

In weiterer bevorzugter Ausführung ist vorgesehen, dass der Nutzinhalt des umgesetzten Prozesssignals in Form eines 1-Bit-Datums übertragen wird, welches applikationsspezisch beispielsweise bereits unter Verwendung einer einfachen logischen "UND" Verknüpfungseinrichtung bereitstellbar ist. Ein einmal projektiertes und/oder im Betrieb befindliches Sicherheitskernsystem ist folglich unabhängig vom etwaigen Austausch oder von etwaigen Änderungen angeschaltbarer systemsicherheitsrelevanter Ein- und/oder Ausgangskomponenten.

Zur weiteren Erhöhung der Sicherheit ist erfindungsgemäß ferner vorgeschlagen, dass die Übertragung des umgesetzten Prozessignals abgesichert, insbesondere mittels eines auf dem Nutzinhalt basierten Datensicherungswertes erfolgt, wobei in weiterer vorteilhafter Ausbildung die Mittel zur Absicherung des umgesetzten Signals zum Generieren und Anhängen wenigstens eines dem Nutzinhalt folgenden Prüfbits ausgebildet sind.

Für die Praxis hat sich hierbei der Einsatz eines sogenannten CRC (Cyclic Redundancy Check) zur weiteren wesentlichen Erhöhung der Fehlererkennungsrate als zweckmäßig erwiesen.

Die in bevorzugter Weise Hardware- und/oder Softwareelemente umfassenden Umsetzmittel sind in Vorteilhafterweise an im Wesentlichen jeder beliebig vorgebbaren und/vorgegeben Stelle eines Prozesssignalübertagungsweges einbindbar, so dass insbesondere auch nachträglich eine Erweiterung des Sicherheitssystems durch zusätzliche sicherheitsrelevante Komponenten gewährleistet ist.

Die Erfindung ist folglich im Wesentlichen in beliebigen Netzwerken einsetzbar und ermöglicht eine Anordnung von sicherheitsrelevanten Komponenten über das gesamte Netzwerk verteilt hinweg, ungeachtet von systembasierten Einheiten, wie Systemkopplern und Gateways, und zeichnet sich durch eine einfache und hohe Integration selbst in bestehende Techniken aus.

In vorteilhafter Weiterbildung ist ferner vorgesehen, dass darüber hinaus an vorgegebenen und/oder vorgebbaren Systemausgangsbaugruppen, wie beispielsweise systemspezifische Aktoren, Antriebe oder mechatronische Einheiten, das zur sicheren Systemverarbeitung einkanalig umgesetzte Prozesssignal auch wieder in mehrere, insbesondere über separate Kanäle geführte Prozesssignale umgesetzt wird.

Die Erfindung wird nachfolgend anhand einer bevorzugten Ausführungsform unter Bezugnahme auf die beigefügte Zeichnung näher beschrieben.

In der Zeichnung zeigt:
- Fig. 1: ein stark vereinfachtes Blockschaltbild eines Sicherheitssystems mit einer angeschalteten
- Fig. 2: Not-Aus-Sicherheitseingangskomponente, und eine Prinzipskizze betreffend eine Signalkette einer Sicherheitsfunktion gemäß der Erfindung.

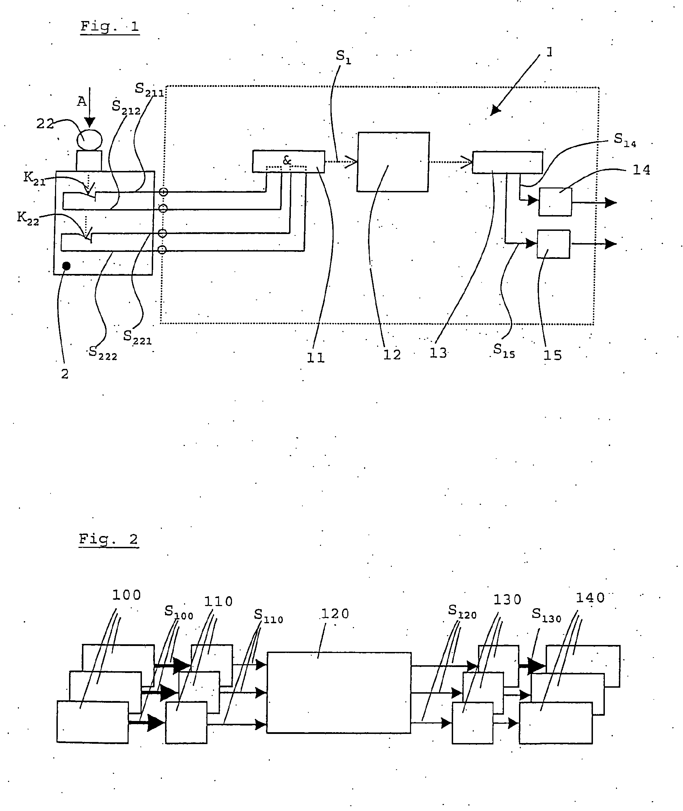

Unter Bezugnahme zunächst auf Fig. 1 ist ein im Ganzen mit 1 gekennzeichnetes Sicherheitssystem stark vereinfacht dargestellt, welches beispielsweise in der Fertigungsindustrie Personen-, Maschinen- und/oder umwelschutzbetreffende Bereiche sicherheitstechnisch steuert und/oder regelt.

Beispielhaft ist hierzu eine Not-Aus-Funktionskomponente 2 mit einer sicheren Eingangskomponente 11 des Sicherheitssystems 1 zur Erkennung eines ggfs. z.B. bei einem zu überwachenden Antrieb vorliegenden systemsicherheitsrelevenaten Ereignisses "Not-Aus" verbunden. Insbesondere bei bestehenden, vorstehend erwähnten hohen Sicherheitsanforderungen ist die Beschaltung einer derartigen Not-Aus Funktionskomponente 2 redundant, beispielsweise zweikanalig auszuführen. Im vorliegenden Beispielsfall befinden sich bei der dargestellten nicht aktivierten Not-Aus-Funktion zwei parallel angeordnete Kontakte K₂₁ und K₂₂ im kontaktgebenden Zustand, so dass die dem Kontakt K₂₁ zugeordneten Teilsignalpfade S₂₁₁ und S₂₁₂ über den geschlossenen Kontakt K₂₁ miteinander leitend verbunden sind. An der sicheren System-Eingangskomponente 11 ist in diesem Fall ein dem Kontakt K₂₁ zugeordnetes "Eins"-Signal abgreifbar. Entsprechend ist an den miteinander verbundenen Teilsignalzweigen S₂₂₁ und S₂₂₂ mittels der sicheren Eingangskomponente 11 ein dem Kontakt KS₂₂ zugeordnetes "Eins"-Signal abgreifbar.

Bei Betätigen der Not-Aus-Funktion durch Drücken eines Not-Aus-Tasters 22 in bei Fig. 1 mit A gekennzeichnete Richtung werden die Kontakte K₂₁ und K₂₂ geöffnet, so dass in Folge an der Eingangskomponente 11 über den somit unterbrochenen Signalpfad S₂₁₁-S₂₁₂ ein dem Kontakt K21 zugeordnetes "NULL"-Signal und über den unterbrochenen Signalkreislauf S₂₂₁-S₂₂₂ ein dem Kontakt K₂₂ zugeordnetes "NULL"-Signal abgreifbar ist.

Die beiden zur Sicherheit redundant erfassten Prozesssignale werden nun erfindungsgemäß mittels der sicheren Eingangskomponente 11 des Sicherheitssystems 1 auf ein einziges Prozesssignal S₁ reduziert. Das alleinige Prozesssignal S₁ wird über ein nicht näher dargestelltes Netzwerk und/oder einen Backplane-Bus eines Systemrechners somit über einen Kanal zur systembasierten Weiterverarbeitung einer Steuerung 12 mit entsprechend ausgebildeter Logikverarbeitung geführt. Ist eine sichere Reaktion unter Ansprechen auf das Prozesssignal S₁ zu veranlassen, wird diese direkt an der Steuerung 12 ausgeführt oder mittels Netzwerk und/oder Backplane-Bus weiter zu einer sicheren Ausgangskomponente 13 transferiert, welche über Reaktionssignale S₁₄ und S₁₅ Microcontroller 14 bzw. 15 zum Abschalten von zugeordneten, mit dem Sicherheitssystem 1 überwachten Bereichseinrichtungen, im vorliegenden Fall also zu überwachenden Antrieben, beispielsweise von Motoren oder Schütztüren, entsprechend ansteuern.

Insbesondere, um eine pozessorgestützte, zumindest onlinenahe Weiterverarbeitung des Prozesssignals S₁ zu gewährleisten erfolgt die Umsetzung bevorzugt in ein digitales Signal S₁.

Zur Generierung eines 1-Bit-Datums, umfasst im zugrundeliegenden Beispielsfall die sichere Eingangskomponente 11 bevorzugt eine mittels entsprechender Hardware- und/oder Softwareelementen ausgebildete logische "UND"-Verknüpfung hinsichtlich der beiden Signalkanäle S₂₁₁-S₂₁₂ und S₂₂₁-S₂₂₂.

Entsprechend weist das umgesetzte Prozesssignal S₁ den Wert "1" auf, sofern beide Schalter S₂₁ und S₂₂ geschlossen sind und also zwei zugeordnete redundante Prozesssignale mit jeweils einem dem Signalwert von "1" entsprechenden Signalinhalt über die sichere Eingangskomponente 11 abgreifbar sind. Ist die Not-Aus-Funktion aktiviert und also beide Signalpfade S₂₁₁-S₂₁₂ und S₂₂₁-S₂₂₂ unterbrochen, weist das

umgesetzte Prozesssignal S₁ den Wert "0" auf. Entsprechend entspricht der Signalwert des Prozesssignals S₁ dem Wert "0" wenn einer der beiden Schalter S₂₁ und S₂₂ geöffnet ist, so dass im Fehler- oder Sicherheitsfall der Signalwert des Prozesssignals S₁ somit immer "0" ist.

Die Reduktion der redundant erfassten Prozesssignale auf das einzige Prozesssignal S₁ betrifft somit ausschließlich die Kanalzahl und nicht den Gesamtsignalinhalt. Wird zum Beispiel wie bei Fig. 1 auf Kurzschluss überwacht, basiert bei der erfindungsgemäßen systembasierten Weiterverarbeitung mit dem einkanaligen System zwischen der sicheren Eingangskomponente 11 und Ausgangskomponente 13 des Sicherheitssystems 1 der ein fehlerfreies Verhalten signalisierende Gesamtsignalinhalt folglich auf den für S₂₁₁-S₂₁₂ und S₂₂₁-S₂₂₂ hierbei gültigen Signalwerten "beide Kanäle 1".

Zur Erhöhung der Sicherheit, wird zwischen der gemäß Fig. 1 dargestellten sicheren Eingangskomponente 11 und der sicheren Ausgangskomponente 13, das Prozesssignal S₁ ferner abgesichert übertragen.

Praktischerweise wird hierzu mittels der Eingangskomponente 11 wenigstens ein Prüfbit oder eine Prüfsumme dem Nutzinhalt angehängt. Die sichere Eingangskomponente 11 umfasst bevorzugt Mittel, beispielsweise ein entsprechend angepasstes Schieberegister, um ein CRC-Verfahren durchzuführen. Der zu generierende CRC-Code wird je nach Applikation und/oder sicherheitssystemspezifischen Erfordernissen zur jeweils benötigten Absicherung entsprechend hoch generiert, z.B. ein CRC-32-Code. Es sei jedoch darauf hingewiesen, dass auch mit anderen, dem Fachmann an sich bekannten Mitteln geeignete sicherheitstechnische Maßnahmen durchgeführt werden können,

um insbesondere dem internationalen Standard IEC 61508 zu genügen.

Unter zusätzlicher Bezugnahme auf Fig. 2 umfasst somit eine Signalkette gemäß der Erfindung zunächst das sichere Erfassen von Eingangsinformationen basierend auf anschaltbaren, sicherheitsrelevante Ereignisse auslösenden Funktionskomponenten 100, wie beispielsweise Sensoren. Die mittels redundanter Prozesssignale S₁₀₀ jeweils erfassten Ereignisse bzw. Prozessinformationen werden anschließend über sichere Eingangskomponenten 110 jeweils in ein einziges Prozesssignal S₁₁₀ zur weiteren systembasierten Verarbeitung umgesetzt wird. Es sei darauf hingewiesen, dass die umzusetzenden, also am Eingang der Eingangskomponenten 110 anliegenden Prozesssignale S₁₀₀ je nach spezifischer Applikation bzw. Schutzfunktionskomponente in digitaler und/oder analoger Form vorliegen. Zur Umsetzung von analogen Prozesssignalen S₁₀₀ durch die Eingangskomponenten 110 in ein digitales Prozesssignal S₁₀₁, umfasst die Umsetzeinrichtung eine entsprechende A/D-Wandlerkomponente.

Es sei ferner darauf hingewiesen, dass die Umsetzeinrichtungen 110 je nach systemspezifischer Ausführung auch in intelligenten Netzteilnehmerkomponenten oder mechatronischen Einheiten enthalten sein können und nicht zwingend als separate sichere Eingangskomponenten ausgebildet sein müssen.

Die nach den Umsetzeinrichtungen 110 abgesichert bereitgestellten Prozesssignale S₁₁₀ können folglich einkanalig über das Gesamtsystem, also insbesondere über wenigstens ein ring-, stern-, linien- und/oder baumartig ausgebildetes Netzwerk und/oder Busnetz einschließlich Übertragungsstrecken und Struktur-/Verarbeitungskomponenten transportiert werden.

Ferner erfolgt in den systembasierten weiterverarbeitenden Einrichtungen 120, wie z.B. Steuerungen und/oder Logiken und/oder Netzwerken, die Verarbeitung des umgesetzten Prozesssignals folglich einsignalig.

Zur Veranlassung sicherer Reaktionen in Ansprechung auf jeweilige Prozesssignale S₁₁₀ werden entsprechende Reaktionssignale S₁₂₀, die bevorzugt gleichermaßen einsignalig und abgesichert bereitgestellt werden, zu entsprechenden Ausgangskomponenten 130, die im vorliegenden Fall zur binären Signalverarbeitung ausgebildet sind, weitergeführt, um angeschaltete Ausgabefunktionskomponenten 140, wie beispielsweise Aktoren, insbesondere Antriebe und/oder mechatronische Einheiten, entsprechend der veranlassten Reaktionen zur sicheren Ausgabe und/oder zum sicheren Abschalten anzusteuern.

Wie bei Fig. 2 angedeutet, sind von der Erfindung ferner Ausführungsformen umfasst, bei denen die sicheren Ausgangskomponenten 130 wenigstens zum Teil auch derart ausgebildet sind, dass ein einkanalig zugeführtes Prozesssignal S₁₂₀ mit gesicherter Prozessinformation wieder in mehrere, auch über separate Kanäle übertragbare Prozesssignale S₁₃₀ zur Ansteuerung der Ausgabefunktionskomponente 140 umgesetzt wird.

Die erfindungsgemäße Anwendung zum vereinfachten Übertragen von sicheren Prozessinformationen ermöglicht somit zusätzlich zur wesentlich verbesseren Kapazitätsausnutzung aufgrund geringerer sicher zu übertragender Datenmengen bei gleichem Informationsgehalt eine wesentliche Vereinfachung bei der Projektierung und Programmierung sicherer Systeme. Dies basiert insbesondere darauf, dass die sonst in der Hardware-Sicht zweikanalig bzw. mehrkanalig ausgeführten Verknüpfungen

unter Zugrundelegung der Erfindung nunmehr einsignalig, den eigentlichen Sinninhalt darstellend, ausgeführt werden, welches weitestgehend der Erwartungshaltung des Projektierers, Programmierers und/oder Servicetechnikers entspricht, der beispielsweise den Ausgang "Motor" als ein Signal, "Motor ein " oder "Motor aus ", erkennt. Vor bzw. nach der Umsetzstelle liegt somit eine andere Sichtweise vor.

Da die Umsetzung bzw. Reduktion von mehreren, ein Systemsicherheitsrelevantes Ereignis beschreibenden Prozesssignalen in ein einziges Prozesssignal im Wesentlichen an beliebiger Stelle des Prozesssignalübertragunsweges erfolgen kann, wie beispielsweise auch in Backplane-Systemen, umfasst die Erfindung eine Vielzahl von Ausführungsformen, bei denen die Umsetzeinrichtungen im Wesentlichen über das gesamte Sicherheitssystem und/oder Netzwerk verteilt sind, ungeachtet von etwaigen Systemkopplern und Gateways.

Insgesamt ist der erfindungsgemäße Gegenstand bei Sicherheitssystemen nicht nur in der Fertigungsindustrie insbesondere zur Überwachung von Not-Aus-Funktionen, von Bereichen, wie beispielsweise von Lichtgittern, Schutztüren und/oder Scannern, von diversen Applikationen, wie beispielsweise von Robotern, Bereichsübergängen einschließlich Muting, Blanking und/oder Pressen, und für die sicherheitstechnische Steuerung und/oder Regelung von Aktorik und Sensorik, insbesondere mit integrierter Sicherheit einsetzbar, sondern ferner insbesondere im Bereich des Personentransports, wie beispielsweise bei Bergbahnen oder Aufzügen, in der Gebäudetechnik, der Feuerungstechnik und der Prozessindustrie, um nur einige Anwendungsbeispiele zu nennen.

Zwischen den sicheren, systemspezifisch intelligenten Ein- und Ausgangskomponenten 110, 130 und der sicherheitssteuernden Logikverarbeitung 120 wird folglich aufgrund der in den Umsetzeinrichtungen 110, 130 ausgeführten sicherheitsrelevanten vorverarbeitenden Funktionen, gemäß vorstehender Beschreibung, bevorzugt ausschließlich abgesicherte, einkanalige sicherheitsrelevante Prozessinformationen übertragen.

## Patentansprüche

1. Verfahren zum Übertragen von sicheren
Prozessinformationen **dadurch gekennzeichnet, dass** mehrere, zur Erkennung eines Systemsicherheits relevanten Ereignisses, redundant erfasste Prozesssignale (S₂₁₁-S₂₁₂, S₂₂₁-S₂₂₂, S₁₀₀) zur Systembasierten Weiterverarbeitung in ein einziges Prozesssignal (S₁, S₁₁₀) umgesetzt werden.

2. Verfahren nach Anspruch 1, ferner **dadurch gekennzeichnet, dass** die redundant erfassten Prozesssignale (S₂₁₁-S₂₁₂, S₂₂₁-S₂₂₂, S₁₀₀) bis zur Umsetzung über mehrere Kanäle erfasst werden und das umgesetzte Prozesssignal (S₁, S₁₁₀) über einen Kanal übertragen wird.

3. Verfahren nach Anspruch 1 oder 2, ferner **dadurch gekennzeichnet, dass** die Erfassung digital oder analog erfolgt.

4. Verfahren nach einem der vorstehenden Ansprüche, ferner **dadurch gekennzeichnet, dass** die Umsetzung in ein digitales Prozesssignal (S₁, S₁₁₀) erfolgt und/oder,
dass als Nutzinhalt des Prozesssignals (S₁, S₁₁₀) ein 1-Bit-Datum übertragen wird
und/oder,
dass die Übertragung des umgesetzten Prozesssignals (S₁, S₁₁₀) abgesichert erfolgt
und/oder,
dass dem Nutzinhalt des umgesetzten Prozesssignals (S₁, S₁₁₀) unter Ansprechen auf das Umsetzen wenigstens ein Prüfbit angehängt wird
und/oder,
dass zur Erzeugung des wenigstens einen Prüfbits ein CRC-Verfahren eingesetzt wird.

5. Verfahren nach einem der vorstehenden Ansprüche, ferner **dadurch gekennzeichnet, dass** die Umsetzung an einer beliebig vorgebbaren und/oder vorgegebenen Stelle des Prozesssignalübertragungweges erfolgt.

6. Verfahren nach einem der vorstehenden Ansprüche, ferner **dadurch gekennzeichnet, dass** an einer vorgebbaren und/oder vorgegeben System-Ausgangskomponente (13, 130) das systemintern einkanalig übertragene Prozesssignal (S₁, S₁₁₀, S₁₂₀) wieder in mehrere, insbesondere über separate Kanäle geführte Prozesssignale (S₁₃₀) umgesetzt wird.

7. Vorrichtung zum sicheren Übertragen von zur Systemsicherheit redundant erfassten Prozesssignalen (S₂₁₁-S₂₁₂, S₂₂₁-S₂₂₂, S₁₀₀) *,*
**gekennzeichnet durch** Mittel (11, 110) zum Umsetzen von mehrkanalig zugeführten Prozesssignalen (S₂₁₁-S₂₁₂, S₂₂₁-S₂₂₂, S₁₀₀) in ein einziges, über einen Kanal übertragbares Prozesssignal (S₁, S₁₁₀).

8. Vorrichtung nach Anspruch 7, ferner umfassend Mittel (12, 120) zur Systembasierten Weiterverarbeitung einkanalig geführter Prozesssignale (S₁, S₁₁₀) und/oder,
bei welcher die Umsetzmittel einer Eingangskomponente (11), Ausgangskomponente (13), einer intelligenten Einheit und/oder mechatronischer Einheit zugeordnet sind
und/oder,
dass die Umsetzmittel (11) zur Erzeugung eines 1-Bit-Datums (S₁) ausgebildet sind.

9. Vorrichtung nach einem der Ansprüche 7 bis 8, bei welcher die Umsetzmittel (11) eine logische UND-Verknüpfungeinrichtung umfassen.

10. Vorrichtung nach einem der Ansprüche 7 bis 9, ferner **dadurch gekennzeichnet, dass** die Umsetzmittel (11, 110) Mittel zur Absicherung des umgesetzten Prozesssignals (S₁) aufweisen.

11. Vorrichtung nach Anspruch 10, ferner **dadurch gekennzeichnet, dass** die Umsetzmittel (11, 110) zur Absicherung Mittel zum Generieren wenigstens eines Prüfbits und zum Anhängen des wenigstens eines Prüfbits an den Signalinhalt des Prozesssignals (S₁) umfassen.

12. Vorrichtung nach einem der Ansprüche 7 bis 11, ferner **dadurch gekennzeichnet, dass** die Umsetzmittel (11, 110) zur Anwendung eines CRC-Verfahrens ausgebildet sind.

13. Vorrichtung nach einem der Ansprüche 7 bis 12, ferner **dadurch gekennzeichnet, dass** die Umsetzmittel Hardware- und/oder Softwareelemente umfassen.

14. Sicherheitssystem, insbesondere wenigstens ein Netzwerk für eine Automatisierungsanlage umfassend, mit wenigstens einer Vorrichtung nach einem der Ansprüche 7 bis 13.

15. Verwendung einer Vorrichtung nach einem der Ansprüche 7 bis 13 zur Durchführung des Verfahrens nach einem der Ansprüche 1 bis 6, insbesondere innerhalb eines Sicherheitssystem nach Anspruch 20.
